(19) Europäisches Patentamt / European Patent Office / Office européen des brevets

(11) **EP 3 534 648 B1**

(12) **EUROPEAN PATENT SPECIFICATION**

(45) Date of publication and mention
of the grant of the patent:
**05.01.2022 Bulletin 2022/01**

(51) Int Cl.:
**H04W 48/10** *(2009.01)*     **H04W 48/16** *(2009.01)*
**H04W 48/20** *(2009.01)*     **H04W 84/12** *(2009.01)*

(21) Application number: **17864265.8**

(22) Date of filing: **21.03.2017**

(86) International application number:
**PCT/CN2017/077565**

(87) International publication number:
**WO 2018/076598 (03.05.2018 Gazette 2018/18)**

(54) **AUTOMATED NETWORK ACCESS BASED ON SAME MAC ADDRESS**

AUTOMATISIERTER NETZWERKZUGRIFF BASIEREND AUF DERSELBEN MAC-ADRESSE

ACCÈS RÉSEAU AUTOMATISÉ BASÉ SUR LA MÊME ADRESSE MAC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2016  CN 201610940347**

(43) Date of publication of application:
**04.09.2019 Bulletin 2019/36**

(73) Proprietor: **ZTE Corporation
Shenzhen, Guangdong 518057 (CN)**

(72) Inventor: **SONG, Xiaoxia
Shenzhen
Guangdong 518057 (CN)**

(74) Representative: **Aipex B.V.
P.O. Box 30223
3001 DE Rotterdam (NL)**

(56) References cited:
EP-A1- 2 988 471     WO-A1-2013/166934
WO-A1-2016/144487    CN-A- 103 220 752
CN-A- 103 260 214    CN-A- 103 581 901

• **THE IEEE 802 COMMITTEE OF THE IEEE
COMPUTER SOCIETY: "Draft Recommended
Practice for Multi-Vendor Access Point
Interoperability via an Inter-Access Point
Protocol Across Distribution Systems
Supporting IEEE 802.11 Operation", IEEE DRAFT;
802.11F-D3, IEEE-SA, PISCATAWAY, NJ USA ,
vol. 802.11f drafts, no. D3 24 January 2002
(2002-01-24), pages 1-48, XP068136193,
Retrieved from the Internet:
URL:www.ieee802.org/11/archive2/11f/802.11
f-D3.pdf [retrieved on 2002-01-24]**
• **SUNGGEUN JIN ET AL: "A novel idle mode
operation in IEEE 802.11 WLANs",
PROCEEDINGS OF THE 4TH ACM
INTERNATIONAL WORKSHOP ON WIRELESS
MOBILE APPLICATIONS AND SERVICES ON
WLAN HOTSPOTS (WMASH), ACM, 2 PENN
PLAZA, SUITE 701 NEW YORK NY 10121-0701
USA, 29 September 2006 (2006-09-29), pages
71-80, XP058213083, DOI:
10.1145/1161023.1161035 ISBN:
978-1-59593-470-3**

**Description**

**TECHNICAL FIELD**

The present invention relates to the field of communications and, in particular, to a method, apparatus, and system for accessing an access point.

**BACKGROUND**

In the existing art, the technology used between a station (STA) and an access point (AP) includes two manners. In one manner, the STA actively scans the AP by sequentially transmitting a probe request frame on 11 channels and searching for the AP which has the same service set identifier (SSID) as the STA. In the other manner, the STA passively scans the AP by waiting for a beacon frame transmitted by the AP at regular intervals, where the beacon frame provides information "I am here" on the AP and the basic service set (BSS) to which the AP belongs.

In the existing art, a terminal may be connected to a network hotspot in the following manner: a master device A transmits an SSID and a password to the other devices through a wireless fidelity direct (WiFi-Direct)/Bluetooth technology, and the other devices receive a beacon frame from the AP and check whether the SSID in the Beacon frame is consistent with that transmitted by the master device A. If the two SSIDs are consistent, the other devices enter the password to connect with the AP.

The above technical solution has defects. First, a user initiates a process for accessing the AP by clicking the SSID on the STA. In the process, the STA needs to send the probe request frame, and the AP needs to send the beacon frame. Second, in the above technical solution, the master device A simply transmits the SSID and the password to the other devices and the other devices initiate the process for connecting with the AP after acquiring the SSID and password. In the process, the user is still required to manually enter the password, and the access process is not simplified.

No effective solution has been provided to solve the problem in the existing art of a complex process for the terminal to access the network hotspot.

Document EP2988471A1 discloses a method of secured direct link set-up (DLS) for wireless networks. In accordance with aspects of the method, techniques are disclosed for setting up computationally secure direct links between stations in a wireless network in a manner that is computationally secure. A direct link comprising a new communication session is set up between first and second stations in a wireless local area network (WLAN) hosted by an access point (AP), the direct link comprising a new communication session. The AP generates a unique session key for the new communication session and transfers secured copies of the session key to each of the first and second stations in a manner under which only the first and second stations can obtain the session key. A security mechanism is then implemented on the unsecured direct link to secure the direct link between the first and second stations using a secure session key derived from the session key.

The IEEE Draft document available at www.ieee802.org/11/archive2/11lf/802.11f-D3.pdf, and published on 24-01-2002, discloses a draft recommended practice for multi-vendor access point interoperability via an inter-access point protocol across distribution systems supporting ieee 802.11 operation, and specifically discloses "When an AP receives an associate request it should send an IAPP-ADD Packet and a Level 2 Update Frame. The IAPP ADD is an IP packet with destination-IP-address of the subnet broadcast address, the source IP and MAC address of the AP. The message body contains the MAC address of the STA. STA. On receiving this message the AP should check its association table and remove an association with the ST A if it exists".

SUMMARY

Embodiments of the present invention provide a method and system for accessing an access point (AP) according to the independent claims, to solve at least the problem in the existing art of a complex process for a terminal to access a network hotspot. Further improvements are provided in the dependent claims.

The technical solution solves the problem in the existing art of the complex process for the terminal to access the network hotspot, enables the second STA device to quickly connect with the AP, and significantly increases the access speed of a terminal device to the AP while ensuring transmission security.

**BRIEF DESCRIPTION OF DRAWINGS**

The drawings described herein are used to provide a further understanding of the present invention, and form a part of the present application. The exemplary embodiments and descriptions thereof in the present invention are used to explain the present invention and do not limit the present invention in any improper way. In the drawings:

FIG. 1 is a block diagram of hardware of a mobile terminal for a method for accessing an access point according to an embodiment of the present invention;

FIG. 2 is a flowchart of a method for accessing an access point according to an embodiment of the present invention;

FIG. 3 is a structural diagram of a beacon frame according to a preferred embodiment of the present invention;

FIG. 4 is a block diagram of a system for a terminal to access an AP according to a preferred embodiment of the present invention; and

FIG. 5 is a block diagram of an apparatus for accessing an access point according to an embodiment of the present invention.

## DETAILED DESCRIPTION

The present invention will be described hereinafter in detail with reference to the drawings and in conjunction with embodiments. It is to be noted that if not in collision, the embodiments and features therein in the present application may be combined with each other.

It is to be noted that the terms "first", "second" and the like in the description, claims and above drawings of the present invention are used to distinguish between similar objects and are not necessarily used to describe a particular order or sequence.

Embodiment One

The meaning of terms AP and STA involved in the present application are described below.

AP mode: The access point (AP) provides radio access services, allows another wireless device to access the AP, and provides data access. A general wireless router/bridge works in the AP mode. APs are allowed to be connected to each other.

STA mode: The station (STA), similar to a wireless terminal, does not accept a radio access of another device, but may be connected to the AP. A general wireless network card works in the STA mode.

That is, the STA device and the AP device in the present application may be mobile terminals, but it is not limited thereto.

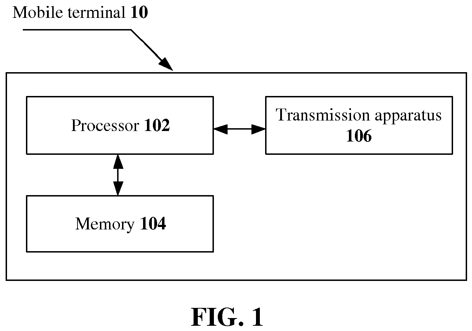

A method embodiment provided by the embodiment one of the present application may be executed in a mobile terminal, a computer terminal or other similar computing apparatuses. Taking the method embodiment to be executed in the mobile terminal as an example, FIG. 1 is a block diagram of hardware of a mobile terminal for a method for accessing an access point according to an embodiment of the present invention. As shown in FIG. 1, a mobile terminal 10 may include one or more (only one is shown in FIG. 1) processors 102, a memory 104 used for storing data, and a transmission apparatus 106 used for implementing a communication function. The one or more processors 102 may include, but is not limited to, a processing apparatus such as a microcontroller unit (MCU) and a field programmable gate array (FPGA). It should be understood by those skilled in the art that the structure shown in FIG. 1 is merely illustrative and not intended to limit the structure of the electronic apparatus described above. For example, the mobile terminal 10 may further include more or fewer components than the components shown in FIG. 1 or may have a configuration different from that shown in FIG. 1.

The memory 104 may be used for storing software programs and modules of application software, and optionally, for example, program instructions/modules corresponding to the method for accessing an access point in the present invention. The processor 102 executes the software programs and modules stored in the memory 104 so as to perform various functional applications and data processing, that is, to implement the method described above. The memory 104 may include a high-speed random access memory, and may further include a nonvolatile memory, such as one or more magnetic storage apparatuses, flash memories or other nonvolatile solid-state memories. In some examples, the memory 104 may further include memories that are remotely disposed with respect to the processor 102. These remote memories may be connected to the mobile terminal 10 via a network. Examples of the preceding network include, but are not limited to, the Internet, an intranet, a local area network, a mobile communication network and a combination thereof.

The transmission apparatus 106 is configured to receive and transmit data via a network. Specific examples of such a network may include a wireless network provided by a communication provider of the mobile terminal 10. In one example, the transmission apparatus 106 includes a network interface controller (NIC), which may be connected to other network devices via a base station and thus be capable of communicating with the Internet. In one example, the transmission apparatus 106 may be a radio frequency (RF) module, which is used for communicating with the Internet in a wireless way.

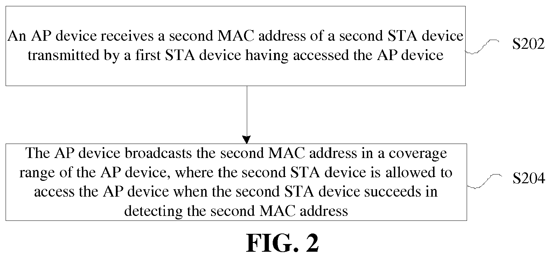

This embodiment provides a method for accessing an access point executed in the mobile terminal described above. FIG. 2 is a flowchart of a method for accessing an access point according to an embodiment of the present invention. As shown in FIG. 2, the method includes steps described below.

In step S202, an AP device receives a second MAC address of a second STA device transmitted by a first STA device having accessed the AP device.

In step S204, the AP device broadcasts the second MAC address in a coverage range of the AP device, where the second STA device is allowed to access the AP device when the second STA device has detected the second MAC address. It is to be noted that the AP device broadcasts the second MAC address and the second STA device knows that the AP device allows the second STA device to access the AP device only when the second STA device has detected that the second MAC address is the same as a MAC address locally stored.

In the above steps, the AP device receives the second MAC address of the second STA device transmitted by the first STA device having accessed the AP device; and the AP device broadcasts the second MAC address in the coverage range of the AP device, where the second STA device is allowed to access the AP device when the second STA device has detected the second MAC address. The technical solution solves the problem in the existing art of a complex process for a terminal to access a network hotspot, enables the second STA device to quickly connect with the AP, and significantly increases the access speed of a terminal device to the AP while ensuring transmission security.

Optionally, in the present invention, the AP device broadcasts a beacon frame in the coverage range of the AP device, where the beacon frame carries the second MAC address. Of course, the second MAC address may be broadcasted in other manners.

Optionally, in the present invention, the second MAC address is carried in a frame body field after a MAC header in the beacon frame. It will be described in detail in the later preferred embodiment.

Optionally, in the present invention, when the second STA device has accessed the AP device, the AP device acquires a second PMK ID of the second STA device according to a first PMK ID of the first STA device, and transmits the second PMK ID to the second STA device. It is to be noted that in the present application, a PMK ID is directly transmitted by a STA device and the AP device, and different PMKs are used according to different PMK IDs.

Optionally, in the present invention, the AP device calculates a third PMK ID according to a preset rule based on the second PMK ID and the second MAC address, and transmits the third PMK ID to the second STA device. The second STA device parses the third PMK ID to obtain the second MAC address, and adopts the second PMK ID to connect with the AP device when the second MAC address is the same as the MAC address locally stored by the second STA device. It is to be noted that the AP device transmits the third PMK ID to the second STA device to provide an opportunity for security verification. Although the third PMK ID is obtained based on the second MAC address and the second PMK ID, a problem such as a bit error may occur when the third PMK ID is transmitted. Therefore, after parsing the third PMK ID, the second STA device needs to check whether the MAC address is the same as the MAC address locally stored. Only when the MAC address is the same as the MAC address locally stored, the second STA device performs data transmission with the AP device according to the second PMK ID.

Optionally, in the present invention, the AP device performs an XOR operation based on the second PMK ID and the second MAC address to obtain the third PMK ID.

Optionally, in the present invention, when the second MAC address obtained by parsing the third PMK ID is different from the MAC address locally stored by the second STA device, the AP device refuses access from the second STA device.

Optionally, in the present invention, when the second STA device fails to detect the second MAC address, the AP device refuses access from the second STA device.

Optionally, in the present invention, the AP device periodically detects a MAC address and expiration time of a PMK of a STA device connected to the AP device. It is to be noted that the AP device may also periodically detect expiration time of the MAC address. After the first STA device disconnects from the AP device, the AP device stores the PMK and MAC address of the first STA device for a period of time, but cannot permanently store them. To avoid wasting PMK resources of the AP device, the AP device may delete the expired MAC and PMK after detecting that the MAC and/or the PMK have expired, and establish a new PMK the next time the same device is connected to the AP device.

According to another embodiment of the present invention, further provided is a method for accessing an access point. The method includes a step described below.

A second STA device connects with an AP device when succeeding in detecting a second MAC address of the second STA device broadcasted by the AP device. The AP device acquires the second MAC address through a first STA device, and the first STA device has been connected to the AP device.

Optionally, in the present invention, the second STA device has detected the second MAC address carried in a beacon frame broadcasted by the AP device in a coverage range of the AP device.

Optionally, in the present invention, the second STA device determines whether the beacon frame carries the second MAC address by detecting a preset identifier bit in a frame body in the beacon frame.

Optionally, in the present invention, after the second STA device has detected the second MAC address of the second STA device broadcasted by the AP device, the second STA device receives an input signal and determines whether to access the AP device according to the input signal. It is to be noted that in the technical solution described in this embodiment, when the second STA device has detected that the second STA device itself is allowed to connect with the AP device, the second STA device may also receive the input signal from a user to determine whether to connect with the AP device.

Optionally, in the present invention, after the second STA device is connected to the AP device, the second STA device receives a third PMK identifier ID transmitted by the AP device. The third PMK ID is obtained by the AP device in the following manner: the AP device encrypts a second PMK ID and the second MAC address of the second STA device according to a preset rule to obtain the third PMK ID.

The second STA device parses the third PMK ID to obtain the second MAC address. When the second MAC address is the same as a MAC address locally stored by the second STA device, the second STA device is connected to the AP device by using the second PMK ID.

Optionally, in the present invention, after the second STA device parses the third PMK ID to obtain the second MAC address, the method further includes a step described below.

When the second MAC address obtained by parsing the third PMK ID is different from the MAC address locally stored by the second STA device, a process for the second STA device to access the AP device is terminated.

According to another embodiment of the present invention, further provided is a method for accessing an access point. The method includes steps described below.

A first STA device accesses an AP device.

The first STA device transmits a second MAC address of a second STA device to the AP device, where the second STA device and the first STA device are both located within a coverage range of the AP device.

Optionally, in the present invention, the first STA device negotiates with the AP device to generate a PMK, initiates a four-way handshake process according to the PMK, and transmits the second MAC address to the AP device in a first handshake of the four-way handshake process.

Optionally, in the present invention, an Extensible Authentication Protocol Over LAN (EAPOL) message of the first handshake carries the second MAC address and expiration time of a PMK ID of the first STA device.

Optionally, in the present invention, after the first STA device transmits the second MAC address of the second STA device to the AP device, the AP device broadcasts the second MAC address in the coverage range of the AP device, and the second STA device accesses the AP device when the second STA device has detected the second MAC address.

Optionally, in the present invention, the AP device broadcasts a beacon frame in the coverage range of the AP device, where the beacon frame carries the second MAC address.

Optionally, in the present invention, before the first STA device transmits the second MAC address of the second STA device to the AP device, the first STA device connects with the second STA device in a WiFi-Direct manner, and acquires the second MAC address of the second STA device.

The present invention will be described below in detail in conjunction with a preferred embodiment.

It is to be noted that, in this preferred embodiment, a STA A device or a STA B device is the first STA device or the second STA device in the embodiments described above. That is, the STA devices involved in the present application may have the same functions, and first and second or A, B, C and D used to distinguish between the STA devices are merely identifiers rather than referring to any differences of entities thereof.

Main content of the preferred embodiment of the present invention is that A, B, C, and D are associated devices (and these devices are located within a coverage range of a same AP) (it is to be complemented here that the premise of the associated devices is to illustrate A, B, C, and D are also connected before these devices are connected to the same AP. These devices may preform information interaction in a WiFi-Direct manner and other manners when they are located within the coverage range of the same AP). A STA A acquires MAC addresses of a STAB, a STA C, and a STA D. After the STA A has accessed the AP, the STA B, the STA C, and the STA D access the AP when they do not know an SSID of the AP which the STA A has accessed. In the process for the STA B to access the AP, a PMK generated during the STA A is connected to the AP is used for Wi-Fi access. For the security of keys, a key of a device A cannot be directly used. The key of the device A and a unique identifier of a device B need to be associated and calculated to obtain a key of the device B. After receiving the key, the device also needs to check that the receiver is B rather than C.

Specifically, to implement the preceding main content, steps below need to be performed.

In step one, after a master device A is successfully connected to the AP, the master device A transmits a PMKID generated in the connection process and the MAC addresses of the other devices (which are located within the coverage range of the AP) to the AP in an EAPOL handshake process for key negotiation.

A first technical point in step one is that the master device acquires the MAC addresses of the other devices.

Among the associated STA devices (A, B, C, and D), the master device A may acquire the MAC addresses of the other devices B, C, and D by connecting with the other devices in the Wi-Fi Direct manner.

In terms of the Wi-Fi Direct manner, the master device may be a group owner (GO), and the other devices may be group clients (GCs). In Wi-Fi Direct protocol specifications, the GO may acquire the MAC address of the GC in Wi-Fi Direct process.

A second technical point in step one is to transmit the generated PMKID and the MAC addresses of the other devices to the AP.

After the STA and the AP are successfully authenticated, the PMK is generated, and a driver initiates a four-way handshake process according to the obtained PMK (in the case of WPA/WPA2 PSK, the PMK is a PSK). In a first handshake of the four-way handshake process, the AP transmits the PMKID generated after the successful authentication to the STA. Meanwhile, the MAC addresses of the STA B, the STA C, and the STA D are transmitted to the AP in the four-way handshake process. Specifically, meanings of fields in an EAPOL message are listed in table 1. Table 1 shows the meanings of the fields in the EAPOL message according to the preferred embodiment of the present invention. As shown in table 1, names, numbers of occupied bytes, and related descriptions of the fields are listed.

Table 1

| Field | Number of Occupied Bytes | Description |
| --- | --- | --- |
| PAE Ethernet Type | 2 bytes | This field indicates a protocol type. A protocol type assigned in 802.1x is 0X888E. |
| Protocol Version | 1 byte | This field indicates a protocol version number supported by a transmitter of an EAPOL frame. This specifications uses a value of 0000 0001. |
| Packet Type | 1 byte | This field indicates a type of a transmitted frame, for example: (a) EAP-Packet, whose value is 0x00, indicates authentication packet data and is used for carrying new authentication information. (b) EAPOL-Start, whose value is 0x01, indicates an authentication starting message and is used for actively initiating an authentication process. (c) EAPOL-Logoff, whose value is 0x02, indicates an offline request message and is used by a user to actively initiate an offline request. (d) EAPOL-Key, whose value is 0x03, indicates a key information message. |
| Packet Body Length | 2 byte | This field indicates a length of a Packet Body. |
| Packet Body | 0/multiple bytes | If Packet Type is EAP-Packet, the corresponding value is taken. For other frame types, this field is null. |

In the preferred embodiment of the present invention, the value of the frame type, Packet Type, in the EAPOL massage of the first handshake is 0x00; the Packet Body carries the PMKID transmitted by the AP to the STA, expiration time of the PMKID, and the MAC addresses of the other devices.

In step two, the AP transmits a beacon broadcast frame carrying an AP SSID and the MAC addresses of the other devices. After receiving the beacon frame, the device B checks whether the beacon frame carries the MAC address of the device B. If the beacon frame carries the MAC address of the device B, the STA B automatically initiates the connection with the AP. Once the beacon frame is received, the STA B stops a probe request and goes directly to an authentication request.

A third technical point in step two is that the AP transmits the beacon broadcast frame carrying the AP SSID and the MAC addresses of the other devices.

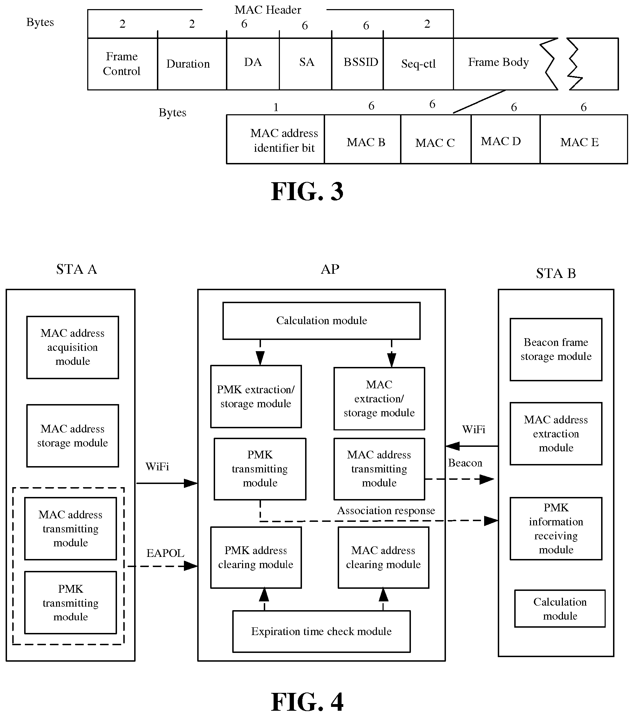

A function of the beacon frame here is to indicate who the AP is (indicated by the SSID of the AP) and who is the AP looking for (indicated by the MAC address carried in the beacon frame). Therefore, the MAC addresses of the STAB, the STA C, and the STA D need to be added in fields of the traditional beacon frame. FIG. 3 is a structural diagram of a beacon frame according to a preferred embodiment of the present invention. As shown in FIG. 3, a frame body after a MAC Header carries the MAC addresses of the STA B, the STA C, and the STA D. Since the frame body has a variable size, enough space may be guaranteed to carry the MAC addresses, and the number of bits of the MAC address is a 48-bit binary number. An identifier bit is first used for identifying that the subsequent data type is the MAC addresses of the GCs, and the MAC addresses of the STA B, the STA C, and the STA D are arranged in sequence. A 48-bit MAC address of the STA B ranks first, followed by the MAC addresses of the STA C, the STA D, and the STA E.

A fourth technical point in step two is that the STA B automatically connects with the AP after receiving the beacon frame.

After receiving the beacon frame, the STA B extracts the identifier bit in the frame body of the beacon frame. If a MAC address identifier exists, 48-bit binary numbers are extracted sequentially. If a binary number is the same as the MAC address of the STAB, it means that the STA B may automatically access the AP without being manually operated by the user. At this time, a user B selects whether to access the AP that transmits the beacon frame. If yes, the STA completes a scanning stage and enters a second stage, i.e., an authentication stage, in which the STA accesses a hotspot. If not, the STA B gives up accessing the AP and continues to wait for a next beacon frame. The STA does not need to transmit the probe request frame and a probe response frame in the whole process.

A fifth technical point in step two is that a PMKID of the GC, i.e., the STA B, is calculated according to the PMKID of the GO, i.e., the STA A.

In the 802.11i protocol, the PMKID is calculated by using the following formula:

$$PMKID = HMAC\text{-}SHA1\text{-}128(PMK, \text{"PMK Name"} \mid MAC\_AP \mid MAC\_STA).$$

HMAC-SHA1-128 is a hash function, which is a one-way function. Only when inputs are known, can an output be obtained. Otherwise, an unknown input cannot be obtained if the output and some inputs are known.

In the above formula, the PMK is generated after the successful authentication; PMK Name is a name of the PMK, which is also known; MAC_AP is a MAC address of the AP; and MAC_STA is the MAC address of the STA.

Through the above analysis, to calculate the PMKID of the STAB, MAC_AP and MAC_STA are known, PMK and PMK Name are the PMK and the PMK name generated when the STA A is connected to AP, and HMAC-SHA1-128 is also known, so the PMKID of the STA B may be calculated.

To enhance the security of the key, the AP does not directly transmit $PMKID_B$ calculated by the above method to the STAB. Content to be transmitted is calculated as follows:

$PMKID_B' = PMKID_B \oplus MAC_B$. (Note that a first $PMKID_B'$ has an identifier in an upper right corner and the second $PMKID_B$ has no identifier. The above difference needs to be noted throughout the present application. The first $PMKID_B'$ is equivalent to the third PMK ID in the embodiments described above).

The receiver, i.e., the STA B, calculates a MAC address based on the received $PMKID_B'$ and $PMKID_B$. It is necessary to check whether the calculated $MAC_B$ is consistent with the MAC address stored locally by the STA. If yes, a key negotiation process may be performed. If not, the key negotiation process is terminated. An XOR operation is performed based on $PMKID_B$ and $MAC_B$ to ensure that the receiver is the STA B rather than the STA E. If the XOR operation is not performed, any receiver may initiate the key negotiation process after receiving $PMKID_B$. A sixth technical point in step two is that after the verification step in the preceding fifth technical point is performed, the AP transmits the calculated PMK ID of the STA B to the STA B. Specifically, the PMK ID may be carried in an association response transmitted by the AP to a terminal where the STAB is located.

In step three, the STA B connects with the AP by using $PMKID_B$ calculated according to $PMKID_A$, and a process in which the PMK ID is generated through EAPOL negotiation between the STA B and the AP is not required.

It is to be noted that the six technical points in the preceding three steps mean that the technical solutions involved in the preceding technical points may be implemented in the preferred embodiment of the present invention, and the technical solutions may be implemented in an order in the preceding technical points.

To implement the six technical points in the preferred embodiment described above, the technical solutions below may be further included.

FIG. 4 is a block diagram of a system for a terminal to access an AP according to a preferred embodiment of the present invention. As shown in FIG. 4, the structural diagram of the system includes the STA A, the AP, and the STA B. The STA A, the AP and the STA B each include multiple functional modules mentioned below. The multiple functional components are described below.

The terminal involved in the first technical point may have the functional modules below. It is to be noted that the terminal in this preferred embodiment is a terminal where the STA device in the preceding embodiment is located.

The terminal includes a MAC address acquisition module, which is configured to acquire the MAC addresses of the GCs in the Wi-Fi Direct process between the GO and the GCs.

The terminal includes a MAC address storage module, which is configured to store the acquired MAC addresses.

The terminal and the AP involved in the second, fifth and sixth technical points may have the functional modules below.

The terminal includes a MAC address transmitting module, which is configured to add the collected MAC addresses to an EAPOL frame of the first handshake after an EAP success. The value of the frame type, Packet Type, is 0x00; and the Packet Body carries the PMKID transmitted by the AP to the STA, the expiration time of the PMKID, and the MAC addresses of the other devices (a starting position of the MAC addresses has an identifier).

The terminal includes a PMK transmitting module, configured to transmit the PMK after the successful authentication in the EAPOL of the first handshake.

The AP includes a MAC address management module. The MAC address management module may further include a MAC address extraction and storage module, a MAC address clearing module and a MAC address transmitting module.

The MAC address extraction and storage module is configured to check whether the value of the frame type, Packet Type, is 0x00 after the EAPOL frame is received, extract content in the Packet Body if yes, check whether an identifier of the starting position of the MAC addresses exists, and extract and store the MAC addresses in the AP if yes.

The MAC address clearing module is configured to clear a MAC address according to expiration time of the MAC address acquired by a receiving module.

The MAC address transmitting module is configured to add the MAC addresses to the beacon frame for broadcasting the MAC addresses.

The AP includes a PMK management module. The PMK management module may include the following submodules: a PMK extraction and storage module, a PMK clearing module, a PMK transmitting module, a calculation module and an expiration time check module.

The PMK extraction and storage module is configured to check whether the value of the frame type, Packet Type, is 0x00 after the EAPOL frame is received, and extract content about the PMK in the Packet Body if yes.

The PMK clearing module is configured to clear a PMK according to expiration time of the PMK acquired by the receiving module.

The PMK transmitting module is configured to transmit the calculated $PMKID_B$ to the STA B through the association response.

The calculation module may perform the two steps below.

In a first step, $PMKID_B$ is calculated using the PMKID calculation formula according to PMK A, MAC AP, and MAC B.

In a second step, an XOR operation is performed based on $PMKID_B$ and MAC B to obtain $PMKID_B$ transmitted by the AP to the STA B. It is to be noted that "$PMKID_B$ transmitted by the AP to the STAB" is the third PMK ID in the embodiments described above.

The PMK transmitting module is further configured to transmit the content calculated by the calculation module in the first step and the second step to the STA B through the association response.

The expiration time check module is configured to periodically check the expiration time of the MAC address and the expiration time of the PMK, and delete information related to the MAC address and the PMK after a predetermined deadline is exceeded.

The AP involved in the third technical point may have the functional modules below.

The AP includes a beacon transmitting unit included in the MAC address transmitting module. The frame body following the MAC header carries the MAC addresses of the STAB, the STA C, and the STA D. Since the frame body has a variable size, enough space may be guaranteed to carry the MAC addresses. One MAC address is a 48-bit binary number. An identifier bit is used for identifying that the subsequent data type is the MAC addresses of the GCs, and the MAC addresses of the STA B, the STA C, and the STA D are arranged in sequence. The first 48-bit MAC address is of the STAB, followed by the MAC addresses of the STA C, the STA D, and the STA E.

The terminal involved in the third technical point may include seven functional modules: a beacon receiving and storage module, a MAC address extraction module, a PMK receiving module, a calculation module, a confirmation module, an automatic access module and an access termination module (the first four modules are shown in FIG. 4, and the latter three modules are not shown in FIG. 4).

The beacon receiving and storage module is configured to receive the beacon frame transmitted by the AP.

The MAC address extraction module is configured to implement following operations. After receiving the beacon frame, the STA extracts the identifier bit in the frame body of the beacon frame. If a MAC address identifier exists, 48-bit binary numbers are extracted sequentially. If a binary number is the same as the MAC address of the STA B, it means that the STA B may automatically access the AP without being manually operated by the user.

The PMK receiving module is configured to receive the association response transmitted by the AP, and extract the content calculated by the calculation module of the AP in the first step and the second step.

The calculation module is configured to calculate the MAC address according to the received $PMKID_B$.

In addition to the four modules shown in FIG 4, the STA B may also include the three modules below.

The confirmation module is configured to make confirmation for automatic access to the AP. When a beacon detection module of the terminal detects the MAC address which is the same as the locally stored MAC address, the beacon detection module triggers the user to confirm whether to automatically access the AP; if yes, an automatic access module is invoked; and if not, an access termination module is invoked.

The automatic access module of the terminal determines, according to the MAC address calculated by the calculation module of the terminal according to the content calculated by the calculation module of the AP in the first step and the second step, whether the MAC address is consistent with that of the terminal. If yes, the automatic access module performs an EAPOL four-way handshake process to enable the STA B to access the AP; and, if not, invokes the access termination module.

The access termination module makes it possible that the STA B refuses to access the AP.

It is to be noted that the method for the terminal to access the AP in this preferred embodiment may be used in the Wi-Fi WPA-PSK or WPA2-PSK authentication mode, or in the Wi-Fi 802.1X authentication mode. A difference is that the PMK is acquired by the SSID and a password in the WPA-PSK and WPA2-PSK authentication modes: PMK = PSK = pdkdf2_SHA1(passphrase, SSID, SSID length, 4096).

In the Wi-Fi 802.1X authentication mode, the PMK is generated after the EAP success. With the solutions in this preferred embodiment, the STA B does not need to perform the EAP process and may directly perform the four-way handshake process to access the AP.

The preferred embodiment of the present invention further provides a method for the terminal to connect with the AP. The method includes steps described below.

In step 1, the master device, i.e., the STA A, acquires the MAC addresses of the slave devices, i.e., the STA B, the STA C, the STA D and the STA E in a manner that the MAC addresses are acquired by the MAC address extraction module in the Wi-Fi Direct process.

In step 2, the master device STA A is connected to the AP and transmits the PMK generated in the authentication process to the AP in the first EAPOL handshake after the authentication process succeeds as well as the MAC addresses in step 1.

In step 3, after receiving the PMK, the AP stores the PMK into the PMK storage module, extracts and stores the MAC addresses carried in the EAPOL message into the MAC address storage module; and stores the expiration time.

In step 4, the AP checks whether the MAC addresses expire through the expiration time check module and broadcasts the MAC addresses of the slave devices STAB, STA C and STAD through the transmitted beacon frame if the MAC addresses do not expire. If the MAC addresses expire, the AP initiates the beacon frame in the existing art.

In step 5, the STA B receives the beacon frame from the AP, and stores and parses the frame to determine whether the frame carries the MAC address locally stored by the STA B. If yes, the STA B responds to the beacon frame, and the AP and the STA B enter the authentication stage of the Wi-Fi connection process. In the whole process, the STA B does not need to transmit the probe request frame for active scanning and continues to perform step 6. If not, the STA B does not respond to the beacon frame and continues to receive the beacon frame of another AP.

In step 6, the STA B shows the user a prompt "whether to agree to access the AP which the GO device has accessed". If the user agrees, step 7 is performed; if the user does not agree, the process for the STA B to access the AP is terminated.

In step 7, after receiving a response of the STA B to the beacon frame, the AP invokes a counter module to check whether the PMK of the STA A in the PMK storage module expires. If the PMK expires, the PMK is deleted and the process for the STA B to access the AP is terminated. If the PMK does not expire, the AP acquires the PMK of the STA A from the PMK storage module, calculates $PMKID_B$ with the calculation formula of the PMKID, calculates $PMKID_B'$ = $PMKID_B \oplus MAC_B$, transmits $PMKID_B$ and $PMKID_B'$ (note that the $PMKID_B'$ has an identifier in the upper right corner) to the STA B through the association response.

In step 8, after receiving $PMKID_B$ and $PMKID_B'$, the STA B reversely deduces the MAC address from $PMKID_B'$ = $PMKID_B \oplus MAC_B$. If the MAC address is consistent with the MAC address locally stored by the STA B, it indicates that the AP does transmits $PMKID_B$ and $PMKID_B'$ to the STA B rather than the STA C. If not, the process for the STA B to access the AP is terminated.

In step 9, the AP and the STA B start the EAPOL four-way handshake process to complete the Wi-Fi access.

From the description of the embodiments described above, it will be apparent to those skilled in the art that the methods in the embodiments described above may be implemented by software plus a necessary general-purpose hardware platform, or may of course be implemented by hardware. However, in many cases, the former is a preferred implementation mode. Based on this understanding, the solutions provided by the present invention substantially, or the part contributing to the existing art, may be embodied in the form of a software product. The computer software product is stored in a storage medium (such as a read-only memory (ROM)/a random access memory (RAM), a magnetic disk or an optical disk) and includes several instructions for enabling a terminal device (which may be a mobile phone, a computer, a server, a network device, or the like) to execute the method according to each embodiment of the present invention.

Embodiment Two

Another embodiment of the present invention further provides a system for accessing an access point. The system includes a first STA device, an AP device, and a second STA device.

The first STA device is configured to transmit a second MAC address of the second STA device to the AP device.

The AP device is configured to broadcast the second MAC address in a coverage range of the AP device.

The second STA device is configured to access the AP device when the second STA device has detected the second MAC address.

Optionally, in the present invention, the AP device is further configured to broadcast a beacon frame in the coverage range of the AP device, where the beacon frame carries the second MAC address.

Optionally, in the present invention, when the second STA device has accessed the AP device, the AP device is configured to calculate a second PMK ID of the second STA device according to a first PMK ID of the first STA device.

Optionally, in the present invention, the AP device is configured to calculate a third PMK ID according to a preset rule based on the second PMK ID and the second MAC address, and transmit the third PMK ID to the second STA device. The second STA device parses the third PMK ID to obtain the second MAC address, and adopts the second PMK ID to connect with the AP device when the second MAC address is the same as a MAC address locally stored by the second STA device.

Optionally, in the present invention, the AP device is configured to periodically detect a MAC address and expiration time of a PMK of a STA device connected to the AP device.

Embodiment Three

This embodiment provides an apparatus for accessing an access point. The apparatus is configured to implement the above-mentioned embodiments and preferred embodiments. What has been described will not be repeated. As used below, the term "module" may be software, hardware or a combination thereof capable of implementing predetermined functions. The apparatus in the embodiment described below is preferably implemented by software, but implementation by hardware or by a combination of software and hardware is also possible and conceived.

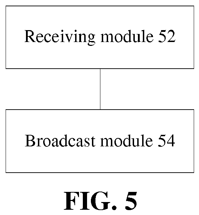

FIG. 5 is a block diagram of an apparatus for accessing an access point according to an embodiment of the present invention. The apparatus is applied to an AP device. As shown in FIG. 5, the apparatus includes a receiving module 52 and a broadcast module 54.

The receiving module 52 (equivalent to the MAC address extraction and storage module in the AP in the embodiment described above) is configured to receive a second MAC address of a second STA device transmitted by a first STA device having accessed the AP device.

The broadcast module 54 (equivalent to the MAC address transmitting module in the AP in the embodiment described above) is connected to the receiving module 52 and configured to broadcast the second MAC address in a coverage range of the AP device, where the second STA device is allowed to access the AP device when the second STA device has detected the second MAC address.

Optionally, in the present invention, the broadcast module 54 is further configured to broadcast a beacon frame in the coverage range of the AP device, where the beacon frame carries the second MAC address.

Optionally, in the present invention, when the second STA device has accessed the AP device, the broadcast module 54 is further configured to acquire a second PMK ID of the second STA device according to a first PMK ID of the first STA device, and transmit the second PMK ID to the second STA device.

Another embodiment of the present invention further provides an apparatus for accessing an access point. The apparatus is applied to a second STA device and includes a second connection module.

The second connection module (equivalent to part of the beacon receiving and storage module and the MAC address extraction module in the embodiment described above) is configured to connect with an AP device when the second STA device has detected a second MAC address of the second STA device broadcasted by the AP device, where the AP device acquires the second MAC address through a first STA device, and the first STA device has been connected to the AP device.

Optionally, in the present invention, the second connection module is further configured to detect whether a beacon frame broadcasted by the AP device in a coverage range of the AP device carries the second MAC address.

Optionally, in the present invention, after the second STA device has detected the second MAC address of the second STA device broadcasted by the AP device, the second connection module is further configured to receive an input signal and determine whether to access the AP device according to the input signal.

Another embodiment of the present invention further provides an apparatus for accessing an access point. The apparatus is applied to a first STA device and includes a first connection module and a transmitting module.

The first connection module is configured to access an AP device.

The transmitting module (equivalent to the MAC address transmitting module in the embodiment described above) is configured to transmit a second MAC address of a second STA device to the AP device, where the second STA device and the first STA device are both located within a coverage range of the AP device.

Optionally, in the present invention, the transmitting module is further configured to initiate a four-way handshake process according to a PMK negotiated by the first STA device with the AP device, and transmit the second MAC address to the AP device in a first handshake of the four-way handshake process.

Optionally, in the present invention, the transmitting module is further configured to, before transmitting the second MAC address of the second STA device to the AP device, connect with the second STA device in a WiFi-Direct manner, and acquire the second MAC address of the second STA device.

It is to be noted that the various modules described above may be implemented by software or hardware.

Implementation by hardware may, but may not necessarily, be performed in the following manners: the various modules described above are located in a same processor, or the various modules described above are located in their respective processors in any combination form.

Embodiment Four

An embodiment of the present invention further provides a storage medium. Optionally, in the embodiment of the present invention, the storage medium may be configured to store program codes for executing steps described below.

In S1, an AP device receives a second MAC address of a second STA device transmitted by a first STA device having accessed the AP device.

In S2, the AP device broadcasts the second MAC address in a coverage range of the AP device, where the second STA device is allowed to access the AP device when the second STA device has detected the second MAC address.

Optionally, in the present invention, the storage medium is further configured to store program codes for executing a step described below.

In S3, a second STA device connects with an AP device when succeeding in detecting a second MAC address of the second STA device broadcasted by the AP device. The AP device acquires the second MAC address through a first STA device, and the first STA device has been connected to the AP device.

Optionally, in the present invention, the storage medium is further configured to store program codes for executing steps described below.

In S4, a first STA device accesses an AP device.

In S5, the first STA device transmits a second MAC address of a second STA device to the AP device, where the second STA device and the first STA device are both located within a coverage range of the AP device.

Optionally, in the embodiment of the present invention, the storage medium described above may include, but is not limited to, a USB flash disk, a ROM, a RAM, a mobile hard disk, a magnetic disk, an optical disk or another medium capable of storing program codes.

Optionally, in the embodiment of the present invention, a processor executes the steps in the methods described in the embodiment 1 according to the program codes stored in the storage medium.

Optionally, for specific examples in the embodiment of the present invention, reference may be made to the examples described in the above embodiments and optional implementation modes, and repetition will not be made in this embodiment.

Apparently, it should be understood by those skilled in the art that each of the above-mentioned modules or steps of the present invention may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention which is only limited by the appended claims.

## INDUSTRIAL APPLICABILITY

Based on the technical solutions provided by the preferred embodiments of the present invention, the AP device receives the second MAC address of the second STA device transmitted by the first STA device having accessed the AP device; and the AP device broadcasts the second MAC address in the coverage range of the AP device, where the second STA device is allowed to access the AP device when the second STA device has detected the second MAC address. The present invention solves the problem in the existing art of the complex process for the terminal to access the network hotspot, enables the second STA device to quickly connect with the AP, and significantly increases the access speed of the terminal device to the AP while ensuring transmission security.

## Claims

1. A method for accessing an access point, AP, performed by a system comprising a first station, STA, device, an AP device and a second STA device, the method comprises:

receiving, by the second STA device, a beacon broadcast frame carrying a second media access control, MAC, address of the second STA device broadcasted by the AP device, and connecting with the AP device only when the second STA device detects that the second MAC address is the same as a MAC address locally stored by the second STA device, wherein the AP device acquires the second MAC address through the first STA device, the first STA device has been connected to the AP device, and the first STA device is connected to the second STA device

wherein after connecting, by the second STA device, with the AP device, the method further comprises:

receiving, by the second STA device, a third pairwise master key, PMK, identifier, ID, transmitted by the AP device, wherein the third PMK ID is obtained by the AP device in a following manner: the AP device encrypts a second PMK ID and the second MAC address of the second STA device according to a preset rule to obtain the third PMK ID; and

parsing, by the second STA device, the third PMK ID to obtain the second MAC address, wherein only when the second MAC address is the same as the MAC address locally stored by the second STA device, the second STA device performs data transmission with the AP device according to the second PMK ID.

2. The method of claim 1, wherein succeeding, by the second STA device, in detecting the second MAC address of the second STA device broadcasted by the AP device comprises:
succeeding, by the second STA device, in detecting the second MAC address carried in a beacon frame broadcasted by the AP device in a coverage range of the AP device.

3. The method of claim 2, wherein succeeding, by the second STA device, in detecting the second MAC address carried in the beacon frame broadcasted by the AP device in the coverage range of the AP device comprises:
determining, by the second STA device, whether the beacon frame carries the second MAC address by detecting a preset identifier bit in a frame body in the beacon frame.

4. The method of claim 1, wherein after the second STA device succeeds in detecting the second MAC address of the second STA device broadcasted by the AP device, the method further comprises:

receiving an input signal; and
determining, by the second STA device, whether to access the AP device according to the input signal.

5. The method of claim 1, wherein after parsing, by the second STA device, the third PMK ID to obtain the second MAC address, the method further comprises:
when the second MAC address obtained by parsing the third PMK ID is different from the MAC address locally stored by the second STA device, terminating a process for the second STA device to access the AP device.

6. A system for accessing an access point, AP, comprising a first station, STA, device, an AP device and a second STA device,

wherein the first STA device is configured to access the AP device; and transmit a second media access control, MAC, address of the second STA device to the AP device, wherein the second STA device and the first STA device are both located within a coverage range of the AP device; the AP device is configured to receive the second MAC address of the second STA device transmitted by the first STA device having accessed the AP device; and broadcast the second MAC address in a coverage range of the AP device;
the second STA device is configured to receive a beacon broadcast frame carrying the second MAC address of the second STA device broadcasted by the AP device, and connect with the AP device only when the second STA device detects that the second MAC address is the same as a MAC address locally stored by the second STA device,
wherein the AP device acquires the second MAC address through the first STA device, the first STA device has been connected to the AP device, and the first STA device is connected to the second STA device;
wherein the second STA device is further configured to:

receive a third pairwise master key, PMK, identifier, ID, transmitted by the AP device, wherein the third PMK ID is obtained by the AP device in a following manner: the AP device encrypts a second PMK ID and the second MAC address of the second STA device according to a preset rule to obtain the third PMK ID; and
parse the third PMK ID to obtain the second MAC address, wherein only when the second MAC address is the same as the MAC address locally stored by the second STA device, the second STA device performs data transmission with the AP device according to the second PMK ID.

**Patentansprüche**

1. Verfahren zum Zugreifen auf einen Zugriffspunkt (access point, AP), das von einem System durchgeführt wird, das eine erste Stationsvorrichtung (STA), eine AP-Vorrichtung und eine zweite STA-Vorrichtung umfasst, wobei das Verfahren Folgendes umfasst:

   Empfangen eines Beacon-Broadcast-Rahmens durch die zweite STA-Vorrichtung, der eine zweite Media Access Control (MAC)-Adresse der zweiten STA-Vorrichtung trägt, die von der AP-Vorrichtung gesendet wurde, und Verbinden mit der AP-Vorrichtung nur dann, wenn die zweite STA-Vorrichtung erkennt, dass die zweite MAC-Adresse die gleiche ist wie eine MAC-Adresse, die von der zweiten STA-Vorrichtung lokal gespeichert wurde,
   wobei die AP-Vorrichtung die zweite MAC-Adresse über die erste STA-Vorrichtung erwirbt, die erste STA-Vorrichtung mit der AP-Vorrichtung verbunden wurde und die erste STA-Vorrichtung mit der zweiten STA-Vorrichtung verbunden ist,
   wobei das Verfahren nach dem Verbinden der zweiten STA-Vorrichtung mit der AP-Vorrichtung ferner Folgendes umfasst:

   Empfangen einer dritten, von der AP-Vorrichtung übertragenen paarweisen PMK-Kennung, ID, durch die zweite STA-Vorrichtung, wobei die dritte PMK-ID von der AP-Vorrichtung auf folgende Weise erhalten wird: die AP-Vorrichtung verschlüsselt eine zweite PMK-ID und die zweite MAC-Adresse der zweiten STA-Vorrichtung gemäß einer voreingestellten Regel, um die dritte PMK-ID zu erhalten; und
   Parsen der dritten PMK-ID durch die zweite STA-Vorrichtung, um die zweite MAC-Adresse zu erhalten, wobei nur dann, wenn die zweite MAC-Adresse die gleiche ist wie die von der zweiten STA-Vorrichtung lokal gespeicherte MAC-Adresse, die zweite STA-Vorrichtung eine Datenübertragung mit der AP-Vorrichtung gemäß der zweiten PMK-ID durchführt.

2. Verfahren nach Anspruch 1, wobei das erfolgreiche Erkennen der zweiten MAC-Adresse der zweiten STA-Vorrichtung, die von der AP-Vorrichtung gesendet wurde, durch die zweite STA-Vorrichtung Folgendes umfasst:
   erfolgreiches Erkennen der zweiten MAC-Adresse durch die zweite STA-Vorrichtung, die in einem Beacon-Rahmen getragen wird, der von der AP-Vorrichtung in einem Abdeckungsbereich der AP-Vorrichtung gesendet wurde.

3. Verfahren nach Anspruch 2, wobei das erfolgreiche Erkennen der zweiten MAC-Adresse, die in dem von der AP-Vorrichtung gesendeten Beacon-Rahmen getragen wird, durch die zweite STA-Vorrichtung im Abdeckungsbereich der AP-Vorrichtung Folgendes umfasst:
   Bestimmen durch die zweite STA-Vorrichtung, ob der Beacon-Rahmen die zweite MAC-Adresse trägt, indem ein voreingestelltes Kennungsbit in einem Rahmenkörper in dem Beacon-Rahmen erkannt wird.

4. Verfahren nach Anspruch 1, wobei das Verfahren, nachdem es der zweiten STA-Vorrichtung gelungen ist, die zweite MAC-Adresse der zweiten STA-Vorrichtung, die von der AP-Vorrichtung gesendet wurde, zu erkennen, ferner Folgendes umfasst:

   Empfangen eines Eingangssignals; und
   Bestimmen durch die zweite STA-Vorrichtung, ob auf die AP-Vorrichtung gemäß dem Eingangssignal zugegriffen werden soll.

5. Verfahren nach Anspruch 1, wobei das Verfahren nach dem Parsen der dritten PMK-ID durch die zweite STA-Vorrichtung, um die zweite MAC-Adresse zu erhalten, ferner Folgendes umfasst:
   wenn sich die zweite MAC-Adresse, die durch das Parsen der dritten PMK-ID erhalten wurde, von der MAC-Adresse unterscheidet, die von der zweiten STA-Vorrichtung lokal gespeichert wurde, einen Prozess für die zweite STA-Vorrichtung beendet, um auf die AP-Einrichtung zuzugreifen.

6. System für das Zugreifen auf einen Zugriffspunkt, AP, das eine erste Stationsvorrichtung, STA, eine AP-Vorrichtung und eine zweite STA-Vorrichtung umfasst,

   wobei die erste STA-Vorrichtung so konfiguriert ist, dass sie auf die AP-Vorrichtung zugreift; und eine zweite Media Access Control (MAC)-Adresse der zweiten STA-Vorrichtung an die AP-Vorrichtung überträgt, wobei sich sowohl die zweite STA-Vorrichtung als auch die erste STA-Vorrichtung in einem Abdeckungsbereich der AP-Vorrichtung befinden; wobei die AP-Vorrichtung so konfiguriert ist, dass es die zweite MAC-Adresse der zweiten STA-Vorrichtung empfängt, die von der ersten STA-Vorrichtung übertragen wurde, die auf die AP-Vorrichtung zugegriffen hat, und die zweite MAC-Adresse in einem Abdeckungsbereich der AP-Vorrichtung sendet;

wobei die zweite STA-Vorrichtung so konfiguriert ist, dass sie einen Beacon-Broadcast-Rahmen empfängt, der die zweite MAC-Adresse der zweiten STA-Vorrichtung trägt, die von der AP-Vorrichtung gesendet wird, und nur dann eine Verbindung mit der AP-Vorrichtung herstellt, wenn die zweite STA-Vorrichtung erkennt, dass die zweite MAC-Adresse die gleiche ist wie eine MAC-Adresse, die von der zweiten STA-Vorrichtung lokal gespeichert wird, wobei die AP-Vorrichtung die zweite MAC-Adresse über die erste STA-Vorrichtung erwirbt, die erste STA-Vorrichtung mit der AP-Vorrichtung verbunden wurde und die erste STA-Vorrichtung mit der zweiten STA-Vorrichtung verbunden ist;

wobei die zweite STA-Vorrichtung ferner konfiguriert ist zum:

Empfangen einer dritten, von der AP-Vorrichtung übertragenen paarweisen PMK-Kennung, ID, wobei die dritte PMK-ID von der AP-Vorrichtung auf folgende Weise erhalten wird: die AP-Vorrichtung verschlüsselt eine zweite PMK-ID und die zweite MAC-Adresse der zweiten STA-Vorrichtung gemäß einer voreingestellten Regel, um die dritte PMK-ID zu erhalten; und

Parsen der dritten PMK-ID, um die zweite MAC-Adresse zu erhalten, wobei nur dann, wenn die zweite MAC-Adresse die gleiche ist wie die von der zweiten STA-Vorrichtung lokal gespeicherte MAC-Adresse, die zweite STA-Vorrichtung eine Datenübertragung mit der AP-Vorrichtung gemäß der zweiten PMK-ID durchführt.

## Revendications

1. Procédé d'accès à un point d'accès, AP, réalisé par un système comprenant un premier dispositif de station, STA, un dispositif AP et un second dispositif STA, le procédé comprend :

la réception, par le second dispositif STA, d'une trame de diffusion de balise portant une seconde adresse de contrôle d'accès au support, MAC, du second dispositif STA diffusée par le dispositif AP, et la connexion au dispositif AP uniquement lorsque le second dispositif STA détecte que la seconde adresse MAC est la même qu'une adresse MAC stockée localement par le second dispositif STA,
dans lequel le dispositif AP acquiert la seconde adresse MAC via le premier dispositif STA, le premier dispositif STA a été connecté au dispositif AP et le premier dispositif STA est connecté au second dispositif STA,
dans lequel après la connexion, par le second dispositif STA, au dispositif AP, le procédé comprend en outre :

la réception, par le second dispositif STA, d'un troisième identifiant, ID, de clé maîtresse par paire, PMK, transmis par le dispositif AP, dans lequel le troisième ID PMK est obtenu par le dispositif AP de la manière suivante : le dispositif AP chiffre un deuxième ID PMK et la seconde adresse MAC du second dispositif STA en fonction d'une règle prédéfinie pour obtenir le troisième ID PMK ; et
l'analyse, par le second dispositif STA, du troisième ID PMK pour obtenir la seconde adresse MAC,
dans lequel uniquement lorsque la seconde adresse MAC est la même que l'adresse MAC stockée localement par le second dispositif STA, le second dispositif STA effectue une transmission de données avec le dispositif AP en fonction du deuxième ID PMK.

2. Procédé selon la revendication 1, dans lequel la réussite de détection, par le second dispositif STA, de la seconde adresse MAC du second dispositif STA diffusée par le dispositif AP comprend :
la réussite de détection, par le second dispositif STA, de la seconde adresse MAC portée par une trame balise diffusée par le dispositif AP dans une zone de couverture du dispositif AP.

3. Procédé selon la revendication 2, dans lequel la réussite de détection, par le second dispositif STA, de la seconde adresse MAC portée par la trame balise diffusée par le dispositif AP dans la zone de couverture du dispositif AP comprend :
le fait de déterminer, par le second dispositif STA, si la trame balise porte la seconde adresse MAC en détectant un bit identificateur prédéfini dans un corps de trame dans la trame balise.

4. Procédé selon la revendication 1, dans lequel après que le second dispositif STA réussit à détecter la seconde adresse MAC du second dispositif STA diffusée par le dispositif AP, le procédé comprend en outre :

>   la réception d'un signal d'entrée ; et
>   le fait de déterminer, par le second dispositif STA, s'il faut accéder au dispositif AP en fonction du signal d'entrée.

5. Procédé selon la revendication 1, dans lequel après l'analyse, par le second dispositif STA, du troisième ID PMK pour obtenir la seconde adresse MAC, le procédé comprend en outre :
lorsque la seconde adresse MAC obtenue en analysant le troisième ID PMK est différente de l'adresse MAC stockée localement par le second dispositif STA, l'arrêt d'un processus permettant au second dispositif STA d'accéder au dispositif AP.

6. Système d'accès à un point d'accès, AP, comprenant un premier dispositif de station, STA, un dispositif AP et un second dispositif STA,

>   dans lequel le premier dispositif STA est configuré pour accéder au dispositif AP ; et transmettre une seconde adresse de contrôle d'accès au support, MAC, du second dispositif STA au dispositif AP, dans lequel le second dispositif STA et le premier dispositif STA sont tous deux situés dans une zone de couverture du dispositif AP ;
>   le dispositif AP est configuré pour recevoir la seconde adresse MAC du second dispositif STA transmise par le premier dispositif STA ayant accédé au dispositif AP ; et diffuser la seconde adresse MAC dans une zone de couverture du dispositif AP ;
>   le second dispositif STA est configuré pour recevoir une trame de diffusion de balise portant la seconde adresse MAC du second dispositif STA diffusée par le dispositif AP, et se connecter au dispositif AP uniquement lorsque le second dispositif STA détecte que la seconde adresse MAC est la même qu'une adresse MAC stockée localement par le second dispositif STA, dans lequel le dispositif AP acquiert la seconde adresse MAC via le premier dispositif STA, le premier dispositif STA a été connecté au dispositif AP, et le premier dispositif STA est connecté au second dispositif STA ;
>   dans lequel le second dispositif STA est en outre configuré pour :
>
>>   recevoir un troisième identifiant, ID, de clé maîtresse par paire, PMK, transmis par le dispositif AP, dans lequel le troisième ID PMK est obtenu par le dispositif AP de la manière suivante : le dispositif AP chiffre un deuxième ID PMK et la seconde adresse MAC du second dispositif STA en fonction d'une règle prédéfinie pour obtenir le troisième ID PMK ; et
>>   analyser le troisième ID PMK pour obtenir la seconde adresse MAC, dans lequel uniquement lorsque la seconde adresse MAC est la même que l'adresse MAC stockée localement par le second dispositif STA, le second dispositif STA effectue une transmission de données avec le dispositif AP en fonction du deuxième ID PMK.

Mobile terminal **10**

| Processor **102** | Transmission apparatus **106** |

| Memory **104** |

# FIG. 1

An AP device receives a second MAC address of a second STA device transmitted by a first STA device having accessed the AP device — S202

The AP device broadcasts the second MAC address in a coverage range of the AP device, where the second STA device is allowed to access the AP device when the second STA device succeeds in detecting the second MAC address — S204

**FIG. 2**

EP 3 534 648 B1

Bytes

| | | MAC Header | | | | | |
|---|---|---|---|---|---|---|---|
| 2 | 2 | 6 | 6 | 6 | 2 | | |
| Frame Control | Duration | DA | SA | BSSID | Seq-ctl | Frame Body | |

Bytes

| 1 | 6 | 6 | 6 | 6 |
|---|---|---|---|---|
| MAC address identifier bit | MAC B | MAC C | MAC D | MAC E |

## FIG. 3

STA A          AP          STA B

## FIG. 4

Receiving module 52

Broadcast module 54

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2988471 A1